# EUROPÄISCHE PATENTANMELDUNG

(11) **EP 1 508 821 A1**
(43) Veröffentlichungstag der Anmeldung: **23.02.2005**
(21) Anmeldenummer: 04019223.9
(22) Anmeldetag: 12.08.2004
(51) Int. Cl.: G02B 5/28, A61F 9/02, G02C 7/10

(54) **Strahlungs-Schutzprodukt sowie Strahlungsfilter hierfür**

(30) Priorität: 16.08.2003 DE 10337598
(71) Anmelder: LaserVision GmbH, 96052 Bamberg (DE)
(72) Erfinder: Fiedler, Andreas, 91361 Pinzberg (DE); Martn, Sven, Dipl.-Phys., 07749 Jena (DE); Krüger, Jörg, Dr., 13469 Berlin (DE); Kautek, Wolfgang, Dr., 12203 Berlin (DE); Hertwig, Andreas, Dr., 12203 Berlin (DE)
(74) Vertreter: Rau, Albrecht

(57) **Zusammenfassung**

Ein Strahlungs-Schutzprodukt dient zum Schutz der Augen eines Benutzers vor von außen einfallender Strahlung (7). Es weist eine Fassung und mindestens einen von dieser gehaltenen Filter (6) auf. Dieser umfasst einen der einfallenden Strahlung (7) zugewandten und diese absorbierenden Filterkörper (9) und eine dem Filterkörper (9) im Bezug auf die einfallende Strahlung (7) nachgeordnete Reflexionsschicht (2). Ein Durchtritt von einfallender Strahlung (7) durch den Filter (6) wird durch diese Kombination verhindert. Durch die Nachordnung der Reflexionsschicht (12) wird diese nur gering belastet. Unerwünschte starke Reflexe einfallender Strahlung (7) vom Schutzprodukt zurück in den Raum werden vermieden.

## Beschreibung

Die Erfindung betrifft ein Strahlungs-Schutzprodukt, insbesondere eine Schutzbrille oder ein Sichtfenster, zum Schutz der Augen eines Benutzers vor von außen einfallender Strahlung sowie einen Strahlungsfilter für eine derartiges Schutzprodukt.

Ein derartiges Schutzprodukt, eine Schutzbrille, wird in der US 2002/0159155 A1 beschrieben. Diese weist einen Strahlungsfilter auf. Einfallendes Licht wird durch eine Reflexionsschicht von diesem zunächst teilweise reflektiert. Die Reflexionsschicht durchdringende Strahlung wird anschließend in einem absorbierenden Filterkörper des Strahlungsfilters absorbiert. Diese Schutzbrille weist mehrere Nachteile auf: Einfallende Strahlung wird zum großen Teil reflektiert und propagiert damit unkontrolliert und undefiniert weiterhin im Raum. Eventuell im Raum befindliche weitere Personen können hierdurch verletzt werden. Zudem ist es möglich, dass weiteres strahlungsempfindliches Material durch derartige Reflexe unerwünscht geschädigt wird. Eine Beschädigung der Reflektionsschicht führt dazu, dass die Schutzwirkung einer derartigen Schutzbrille erheblich vermindert ist beziehungsweise gänzlich verloren geht.

Es ist daher die Aufgabe der vorliegenden Erfindung, eine Schutzbrille der eingangs genannten Art derart weiterzubilden, dass eine Gefährdung dritter Personen bzw. strahlungsempfindlichen Materials weitgehend vermieden ist.

Diese Aufgabe ist erfindungsgemäß gelöst durch ein Strahlungs-Schutzprodukt mit den im Anspruch 1 angegebenen Merkmalen sowie durch einen Strahlungsfilter mit den in Anspruch 11 angegebenen Merkmalen.

Erfindungsgemäß wurde erkannt, dass dann, wenn die Reflexionsschicht in Bezug auf die einfallende Strahlung dem absorbierenden Filterkörper nachgeordnet ist, gleichzeitig ein effizienter Schutz des Benutzers und eine weitgehende Vermeidung der Gefährdung von dritten Personen bzw. von weiterem strahlungsempfindlichen Material vermieden werden kann. Die Reflexionsschicht wird nicht der vollen einfallenden Strahlung ausgesetzt, sondern nur dem Anteil, der durch den absorbierenden Filterkörper hindurchtritt. Dies verringert die Anforderungen an die Belastbarkeit der Reflexionsschicht. Durch das Nachordnen der Reflexionsschicht wird diese durch eine gegebenenfalls erfolgende Ablation der der einfallenden Strahlung zugewandten Grenzschicht des Filters nicht degradiert. Strahlung, die von der Reflexionsschicht reflektiert wird, durchtritt den absorbierenden Filterkörper im Hin- und Rücklauf, was dessen absorbierende Wirkung entsprechend erhöht und dazu führt, dass praktisch keine Strahlung den Filter nach dem Einfall wieder unkontrolliert oder undefiniert verlassen kann. Im Vergleich zu einem Strahlungsfilter ohne Reflexionsschicht, d. h. nur mit einem absorbierenden Filterkörper, werden beim erfindungsgemäßen Strahlungs-Schutzprodukt geringere Anforderungen an die absorbierende Leistung des Filterkörpers gestellt. Es kann daher mit geringeren Filterkörperdicken gearbeitet werden, was das Gewicht des Strahlungs-Schutzprodukts reduziert. Einige der oben genannten Vorteile werden nur dann erreicht, wenn der Filterkörper und die Reflektionsschicht den gleichen oder zumindest einen überlappenden spektralen Wirkungsbereich haben. Alternativ ist es möglich, einen erfindungsgemäßen Strahlungsfilter vorzusehen, bei dem der Filterkörper und die Reflektionsschicht keine spektrale Überlappung haben. Der Filterkörper und die Reflektionsschicht können sich bei dieser Alternative spektral so ergänzen, dass eine vorgegebene Schutzstufe bei verschiedenen ausgewählten spektralen Linien oder Spektralbereichen erzielt wird. Diese Wirkung kann insbesondere mit einer hohen Tageslicht-Durchlässigkeit einhergehen. Der Strahlungsfilter des erfindungsgemäßen Strahlungs-Schutzprodukts kann genau einen Filterkörper und genau eine nachgeordnete Reflektionsschicht aufweisen. Alternativ ist auch ein Aufbau des Strahlungsfilters als Filterstack mit einer Mehrzahl von Filterkörpern und Reflektionsschichten in der Abfolge Filterkörper-Reflektionsschicht-Filterkörper-Reflektionsschicht-... möglich. Im Vergleich zu einem absorbierenden Filterkörper und einer Interferenzschicht hat ein derartiger Filterstack eine erhöhte Schadensschwelle. Aufgrund der Verklebungen zwischen den Einzelschichten eines solchen Filterstacks ergibt sich zudem eine erhöhte mechanische Stabilität. Die Einzelkomponenten derartiger Filterstacks können dabei als Absorber beziehungsweise Reflektoren gleicher oder verschiedener Wellenlängen beziehungsweise Wellenlängenbereiche kombiniert werden. Auch ein Wechsel der Materialien für den Filterkörper und den Filterstack gegebenenfalls aufbauende Schichten innerhalb des Filterstacks ist möglich. So kann ein Element des Filterstacks zum Beispiel aus Glas und ein weiteres Element des Filterstacks aus Kunststoff gefertigt sein.

Ein Reflexionsschichtträger nach Anspruch 2 kann als Splitterschutz dienen. Zudem schützt ein derartiger Reflektionsträger die Reflexionsschicht vor externen Einflüssen, insbesondere vor Verkratzen.

Eine Breitband-Reflexionsschicht nach Anspruch 3 gewährleistet einen effizienten Schutz auch vor breitbandiger bzw. vor unter verschiedenen Winkeln einfallender Strahlung.

Eine erste Antireflexschicht nach Anspruch 4 kann, da sie in der Regel härter ist als der Filterkörper, als Kratzschutz dienen. Eine derartige Antireflexschicht kann zudem eine unerwünschte Reflexion der einfallenden Strahlung beim Eintritt in einen optisch dichteren absorbierenden Filterkörper verhindern.

Eine zweite Antireflexschicht nach Anspruch 5 kann ebenfalls als Kratzschutz für den Filterkörper dienen.

Eine Breitband-Antireflexschicht nach Anspruch 6 hat analoge Vorteile wie die Breitband-Reflexionsschicht nach Anspruch 3.

Eine Kittschicht nach Anspruch 7 führt zu einer sicheren Verbindung des Filterkörpers mit dem Reflexionsschichtträger. Alternativ zu einer Kittschicht kann auch zum Beispiel eine Thermoplastfolie oder eine Kleberschicht zur Verbindung des Filterkörpers mit dem Reflektionsschichtträger eingesetzt werden.

Ein Reflexionsschichtträger nach Anspruch 8 erhöht die Sicherheitsreserven des Strahlungs-Schutzprodukts.

Eine Materialwahl nach Anspruch 9 ermöglicht eine relativ kostengünstige Herstellung des Schutzprodukts. Auch andere Materialien, zum Beispiel Kunststoffe beziehungsweise mit Reflektionsschichten versehene Kunststoffe können für den Filterkörper beziehungsweise den Reflektionsschichtträger eingesetzt sein.

Ein Filter gemäß Anspruch 10 schützt effizient vor Laserstrahlung, die vielfach Anwendung findet, insbesondere vor der Emission bei der Fundamentalen eines Titan-Saphir-Lasers.

Die Vorteile des Strahlungsfilters nach Anspruch 11 entsprechen denjenigen, die oben im Bezug auf das Strahlungs-Schutzprodukt genannt sind. Der Strahlungsfilter kann zum Beispiel als Bestandteil von Umhausungen oder auch als Sichtfenster in Schutzvorhängen oder anderen starren oder flexiblen Abschirmungen eingesetzt werden.

Ein Ausführungsbeispiel der Erfindung wird nachfolgend an Hand der Zeichnung näher erläutert. In dieser zeigen:
Fig. 1 eine perspektivische Ansicht einer Strahlungs-Schutzbrille; und
Fig. 2 einen Schnitt durch ein Filterglas der Schutzbrille von Fig. 1.

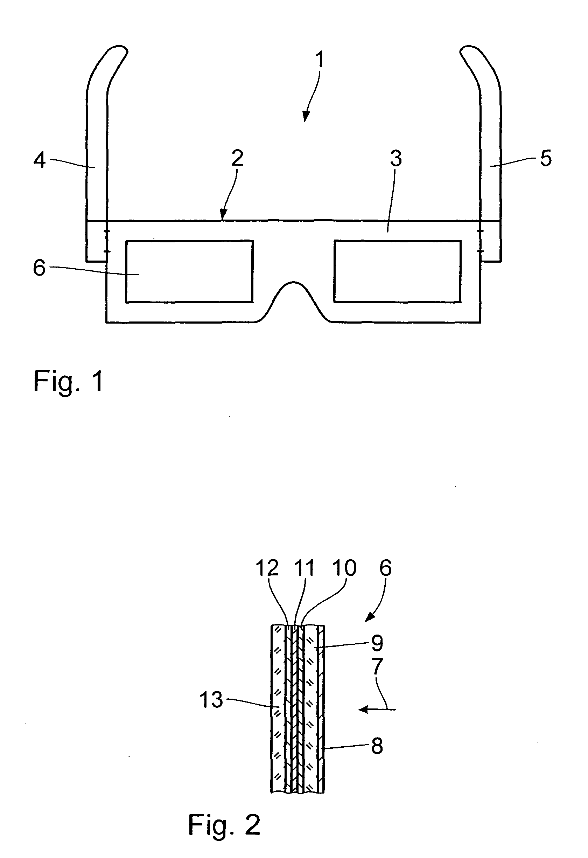

Eine in Figur 1 insgesamt mit dem Bezugszeichen 1 bezeichnete Strahlungs-Schutzbrille als Beispiel für ein erfindungsgemäßes Strahlungs-Schutzprodukt weist als Fassung ein Brillengestell 2 mit einem Fassungsabschnitt 3 und zwei Brillenbügeln 4, 5 auf. Im Fassungsabschnitt 3 sind als Strahlungsfilter zwei gleich aufgebaute Filtergläser 6 gehalten.

Figur 2 zeigt eines der Filtergläser 6 im Schnitt. Von außen einfallende und durch einen Pfeil 7 gekennzeichnete Strahlung, z. B. die Laser-Fundamentale eines Titan-Saphir-Lasers mit 800 nm Zentral-Wellenlänge und 30 fs (Femtosekunden) Impulsdauer, tritt in das Filterglas 6 ein durch eine erste Breitband-Antireflexschicht 8. Letztere ist so ausgelegt, dass sie optimale Transmission bei der Wellenlänge der einfallenden Strahlung 7 hat. Die erste Antireflexschicht 8 ist auf einem Filterkörper 9 aufgebracht. Hierbei handelt es sich um ein an sich aus dem Stand der Technik bekanntes Farbglasfilter, welches die einfallende Strahlung 7 absorbiert. Auf der der ersten Antireflexschicht 8 abgewandten Seite trägt der Filterkörper 9 eine zweite Antireflexschicht 10, deren Aufbau identisch zu demjenigen der ersten Antireflexschicht 8 ist. Über eine Kittschicht 11 ist die zweite Antireflexschicht 10 mit einer Breitband-Reflexionsschicht 12 verbunden. Letztere ist so ausgelegt, dass sie die einfallende Strahlung 7 optimal reflektiert. Die Reflexionsschicht 12 wird von einem Reflexionsschichtträger 13 aus Glas getragen. Die Kittschicht 11 verbindet daher den Filterkörper 9 mit dem Reflexionsschichtträger 13. Der Filterkörper 9 und der Reflexionsschichtträger 13 können auch anderweitig miteinander verbunden sein. Zum Beispiel ist es möglich, diese Verbindung nur über die Halterung durch den Fassungsabschnitt 3 des Brillengestells 2 zu gewährleisten. Gegebenenfalls kann in einem solchen Fall zwischen dem Filterkörper 9 und dem Reflexionsschichtträger 13 noch ein Fluid zur Anpassung der Brechungsindizes der Grenzschichten zwischen dem Filterkörper 9 und dem Reflexionsschichtträger 13 vorgesehen sein.

Die Reflexionsschicht 12 ist von der einen Seite her durch den Filterkörper 9 und von der anderen Seite her durch den Reflexionsschichtträger 13 vor äußeren Einflüssen, insbesondere vor Verkratzen geschützt.

Die Strahlungs-Schutzbrille 1 arbeitet folgender Maßen:

Wenn Strahlung 7, vor der die Augen eines die Schutzbrille 1 tragenden Benutzers geschützt werden soll, von außen auf das Filterglas 6 einfällt, durchtritt diese Strahlung 7 zunächst die erste Antireflexschicht 8. Da letztere eine optimale Transmission für die Strahlung 7 aufweist, geschieht dieser Durchtritt praktisch verlustfrei. Anschließend dringt die Strahlung 7 in den Filterkörper 9 ein und wird dort zum größten Teil auf Grund der Absorptionswirkung des Filterkörpers 9 für die einfallende Strahlung 7 absorbiert. Ein kleiner Teil, zum Beispiel 1%, der einfallenden Strahlung 7 durchtritt den Filterkörper 9 und anschließend wiederum praktisch verlustfrei die zweite Antireflexschicht 10 und die Kittschicht 11. Dieser durchtretende Anteil wird dann von der Reflexionsschicht 12 praktisch vollständig reflektiert, sodass keine Strahlung 7 den Reflexionsschichtträger 13 durchtreten kann. Die Augen des Benutzers sind damit optimal vor der einfallenden Strahlung 7 geschützt. Die von der Reflexionsschicht 12 reflektierte Reststrahlung durchtritt wiederum die Kittschicht 11 und die zweite Antireflexschicht 10 und wird dann vom Filterglas 9 praktisch vollständig absorbiert.

An Stelle eines Reflexionsschichtträgers 13 aus nicht farbfilterndem Glas kann der Reflexionsschichtträger 13 aus dem gleichen absorbierenden Material gefertigt sein wie der Filterkörper 9. Sollte Strahlung die Reflexionsschicht 12 durchtreten, wird diese dann im Reflexionsschichtträger 13 absorbiert.

Auf die Antireflexschichten 8 und/oder 10 kann für bestimmte Anwendungsfälle auch verzichtet werden. Insbesondere die Wirkung der Antireflexschicht 10 kann für viele Anwendungen vernachlässigt werden. Anstelle der Kittschicht 11 kann auch eine andere Verbundschicht zur Verbindung des Filterkörpers 9 mit dem Reflektionsschichtträger 13 eingesetzt sein, zum Beispiel eine Thermoplastfolie.

Die Breitbandschichten 8, 10, 12 haben den Vorteil, dass sie auch unter einem Winkel einfallende Strahlung 7 optimal wie gewünscht transmittieren bzw. reflektieren. Für bestimmte Anwendungsfälle, zum Beispiel dann, wenn nur begrenzte Einfallswinkelvariationen auftreten, können an Stelle der Breitband-Schichten auch schmalbandige Schichten, die dann eine bestimme Wellenlänge beziehungsweise einen bestimmten Wellenlängenbereich noch effizienter transmittieren bzw. reflektieren, eingesetzt sein.

Die Filtergläser 6 können, wie dies bei den meisten bekannten Brillengläsern der Fall ist, derart gewölbt ausgeführt sein, dass schon durch die Gestalt der Filtergläser 6, also im noch nicht in die Strahlungs-Schutzbrille 1 eingebauten Zustand klar ist, welche Seite der Filtergläser 6 der von außen einfallenden Strahlung 7 zugewandt ist. Alternativ ist natürlich eine Plan/Plan-Ausführung der Filtergläser 6 möglich.

Aufgrund der Kombination von Absorptionswirkung einerseits und Reflektionswirkung andererseits resultiert für viele Anwendungsfälle eine leichte und damit angenehm zu tragende Strahlungs-Schutzbrille 1. Dieser Tragekomfort erhöht die Sicherheit der Strahlungs-Schutzbrille 1 zusätzlich, da die Gefahr, dass die Strahlungs-Schutzbrille 1 aufgrund fehlender Akzeptanz nicht getragen wird, deutlich vermindert beziehungsweise ausgeschlossen ist.

## Patentansprüche

1. Strahlungs-Schutzprodukt (1) zum Schutz der Augen eines Benutzers vor von außen einfallender Strahlung (7)
- mit einer Fassung (2),
- mit mindestens einem von der Fassung (2) gehaltenen Strahlungsfilter (6), welcher aufweist:
-- mindestens einen der einfallenden Strahlung (7) zugewandten und diese absorbierenden Filterkörper (9), und
-- mindestens eine dem Filterkörper (9) in Bezug auf die einfallende Strahlung (7) nachgeordnete Reflexionsschicht (12).

2. Schutzprodukt nach Anspruch 1, **dadurch gekennzeichnet, dass** die Reflexionsschicht (12) von einem Reflexionsschichtträger (13) getragen wird, wobei die Reflexionsschicht (12) auf der dem Filterkörper (9) zugewandten Seite des Reflexionsschichtträgers (13) an diesem angebracht ist.

3. Schutzprodukt nach Anspruch 1 und 2, **gekennzeichnet durch** eine Breitband-Reflexionsschicht (12).

4. Schutzprodukt nach einem der Ansprüche 1 bis 3, **dadurch gekennzeichnet, dass** die der einfallenden Strahlung (7) zugewandte Seite des Filterkörpers (9) eine Antireflexschicht (8) für die Strahlung (7) aufweist.

5. Schutzprodukt nach einem der Ansprüche 1 bis 4, **dadurch gekennzeichnet, dass** die der einfallenden Strahlung (7) abgewandte Seite des Filterkörpers (9) eine Antireflexschicht (10) für die Strahlung (7) auf weist.

6. Schutzprodukt nach Anspruch 5, **gekennzeichnet durch** eine Breitband-Antireflexschicht (8, 10).

7. Schutzprodukt nach einem der Ansprüche 2 bis 6, **dadurch gekennzeichnet, dass** der Filterkörper (9) und der Reflexionsschichtträger (13) über eine Kittschicht (11) miteinander verbunden sind.

8. Schutzprodukt nach einem der Ansprüche 2 bis 7, **dadurch gekennzeichnet, dass** der Reflexionsschichtträger (13) aus dem gleichen absorbierenden Material gefertigt ist wie der Filterkörper (9).

9. Schutzprodukt nach einem der Ansprüche 1 bis 8, **gekennzeichnet durch** einen Filterkörper (9) und/oder Reflexionsschichtträger (13) aus Glas.

10. Schutzprodukt nach einem der Ansprüche 1 bis 9, **dadurch gekennzeichnet, dass** der Filterkörper (9) und die Reflexionsschicht (12) derart ausgebildet sind, dass sie einen Durchgang von Laserstrahlung, insbesondere mit einer Wellenlänge um 800 nm, insbesondere mit einer Impulsdauer < 100 fs, z. B. 30 fs, blocken.

11. Strahlungsfilter zur Verwendung in einem Strahlungs-Schutzprodukt nach einem der Ansprüche 1 bis 10.
